# EUROPEAN PATENT APPLICATION

(11) **EP 3 878 270 A1**
(43) Date of publication of application: **15.09.2021**
(21) Application number: 20162549.8
(22) Date of filing: 11.03.2020
(51) Int. Cl.: A01G 9/029, A01G 24/20, A01G 31/00

(54) **CULTURE MEDIUM, CULTURE MEDIUM MANUFACTURING METHOD, CULTURE MEDIUM STRUCTURE AND CULTURE MEDIUM USAGE METHOD**

(71) Applicant: YesHealth Agri-Biotechnology Co., Ltd., Taoyuan City (TW)
(72) Inventor: Chen, Wen-Yang, Taoyuan City (TW); Chen, Huan-Wun, Taoyuan City (TW); Tsai, Wen-Chin, Taoyuan City (TW)
(74) Representative: Lang, Christian

(57) **Abstract**

The present disclosure relates to a culture medium having an agar gel forming by at least one plant growth nutrient, agar powder and water, wherein the agar gel is 100 wt%. A culture medium manufacturing method, a culture medium structure and a culture medium structure usage method are also illustrated in the present disclosure. The culture medium structure has a culture medium of the above culture medium, a seeding board for receiving the culture medium layer, wherein the seeding board has a hollow body which has a top hole, a bottom hole opposite to the top hole and a top base disposed on a top peripheral of the hollow body, and the hollow body and the top base are integrally formed. Via the culture medium of the solid agar gel having the plant growth nutrient, growth health and quality of crops are enhanced.

## Description

### TECHNICAL FIELD

The present disclosure relates to a culture medium, a culture medium manufacturing method, a culture medium structure and a culture medium structure usage method, in particular to, a culture medium is applied to the field of the plant culture, and the culture medium which comprises a solid agar gel having a plant growth nutrient, the culture medium manufacturing method of the above culture medium, the culture medium structure of the culture medium and the culture medium structure usage method of the culture medium.

### RELATED ART

With the excessive industrial development of human beings, a global greenhouse effect has become more and more intense and accompanied by drastic climate changes. The traditional way of planting crops in soil is susceptible to changes in the natural environment and the instability of the climate, which affects a harvest of crops. Further, unpredictable natural disasters, insect pests and man-made environmental pollution make traditional soil cultivation gradually difficult to meet the quality requirements of humans for planting the crops.

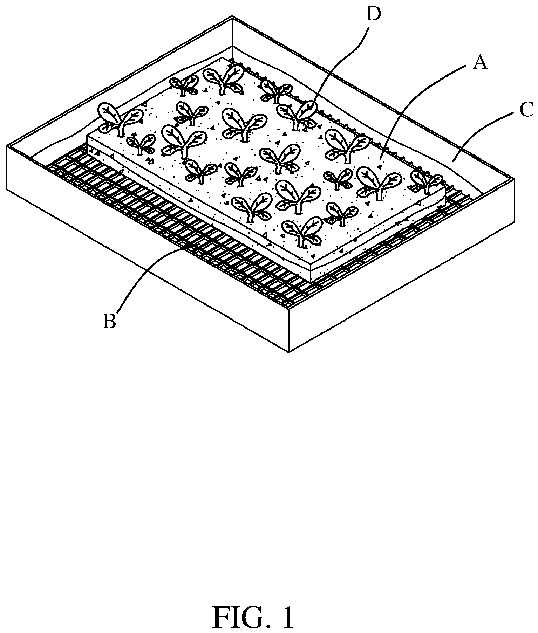

Thus, to cure cons of conventional soil cultivation, hydroponics is thus proposed, as shown in FIG. 1. Generally, the hydroponics is to dispose a sponge (A) in a reception slot (C) comprising a nutrient (B), and then, to plant a crop seed (D) on the sponge (A). Since the hydroponics does not require soil, it is not limited by agricultural land requirements of the conventional agriculture, and compared to the conventional soil cultivation, it can further avoid from the effects of unpredictable natural disasters, insect pests and man-made environmental pollution. In recent years, with the rise of environmental awareness, the use of disposable plastic waste has gradually been reduced. However, by using the above hydroponics, when the crops grow, the sponges are destroyed by roots of the grown crops, and thus a large amount of the sponges are unreusable after harvesting the crops. Further, when planting the crops on the sponges as bases, the roots of planted crops are often oppressed by sponge, which limits the growth of rhizomes and affects the growth and health of planted crops. In addition, nutrient used in the hydroponics will continuously accumulate chemical components or salts in water. Excessive concentrations of chemicals and salts will harm growth of the crops.

How to effectively improve the growth of roots of planted crops caused by the use of the sponges of the above hydroponics by using an innovative hardware design, how to avoid generation of a large number of unreusable sponges after the harvest of planted crops, and how to avoid the accumulation of chemicals and salts which harm the growth of the planted crops are issues that the industry developers and related researchers need to continue their efforts to overcome and solve.

### SUMMARY

An objective of the present disclosure is to provide a culture medium, a culture medium manufacturing method, a culture medium structure and a culture medium structure usage method, in particular to, a culture medium is applied to the field of the plant culture. By using the culture medium, since the solid agar gel of the culture medium comprises the plant growth nutrient, it can prevent the accumulated of the nutrient of the hydroponics from harming the growth of the planted crops. Further, the seeding board of the culture medium structure in is reusable after the planted crop is harvested, so as to reduce the cost of crop planting of each time.

An objective of the present disclosure is to provide a culture medium, at least comprising: an agar gel which is composed of a plant growth nutrient, agar powder and water, wherein the agar gel is 100 wt%.

In an embodiment of the present disclosure, the plant growth nutrient is composed of diammonium phosphate and potassium nitrate.

In the first embodiment of the present disclosure, the agar powder is 0.5-2.5 wt%.

In the first embodiment of the present disclosure, the diammonium phosphate is 0.01-0.02 wt%.

In the first embodiment of the present disclosure, the potassium nitrate is 0.05-0.1 wt%.

In the second embodiment of the present disclosure, the agar powder is 1wt%.

In the second embodiment of the present disclosure, the diammonium phosphate 0.01-0.02 wt%.

In the second embodiment of the present disclosure, the potassium nitrate is 0.05-0.1 wt%.

In another one embodiment of the present disclosure, the plant growth nutrient is at least one or combination of twos selected from diammonium phosphate, potassium nitrate, calcium nitrate, magnesium sulphate, manganese (III) chloride, ferrous sulfate, boric acid, zinc sulfate, copper sulfate, ammonium molybdate and silicon dioxide.

In the third embodiment of the present disclosure, the agar powder is 0.5-2.5 wt%.

In the third embodiment of the present disclosure, the diammonium phosphate is 0.01-0.02 wt%.

In the third embodiment of the present disclosure, the potassium nitrate is 0.05-0.1 wt%.

In the third embodiment of the present disclosure, the calcium nitrate is 0.05-0.1 wt%.

In the third embodiment of the present disclosure, the magnesium sulphate is 0.03-0.05 wt%.

In the third embodiment of the present disclosure, the manganese (III) chloride is 0.00015-0.0003 wt%.

In the third embodiment of the present disclosure, the ferrous sulfate is 0.002-0.004 wt%.

In the third embodiment of the present disclosure, the boric acid is 0.0001-0.0003 wt%.

In the third embodiment of the present disclosure, the zinc sulfate is 0.00002-0.00004 wt%.

In the third embodiment of the present disclosure, the copper sulfate is 0.00002-0.00004 wt%.

In the third embodiment of the present disclosure, the ammonium molybdate is 0.000001-0.000002 wt%.

In the third embodiment of the present disclosure, the silicon dioxide is 0.00001-0.00002 wt%.

In the fourth embodiment of the present disclosure, the agar powder is 1 wt%.

In the fourth embodiment of the present disclosure, the diammonium phosphate is 0.01-0.02 wt%.

In the fourth embodiment of the present disclosure, the potassium nitrate is 0.05-0.1 wt%.

In the fourth embodiment of the present disclosure, the calcium nitrate is 0.05-0.1 wt%.

In the fourth embodiment of the present disclosure, the magnesium sulphate is 0.03-0.05 wt%.

In the fourth embodiment of the present disclosure, the manganese (III) chloride is 0.00015-0.0003 wt%.

In the fourth embodiment of the present disclosure, the ferrous sulfate is 0.002-0.004 wt%.

In the fourth embodiment of the present disclosure, the boric acid is 0.0001-0.0003 wt%.

In the fourth embodiment of the present disclosure, the zinc sulfate is 0.00002-0.00004 wt%.

In the fourth embodiment of the present disclosure, the copper sulfate is 0.00002-0.00004 wt%.

In the fourth embodiment of the present disclosure, the ammonium molybdate is 0.000001-0.000002 wt%.

In the fourth embodiment of the present disclosure, the silicon dioxide is 0.00001-0.00002wt %.

An objective of the present disclosure is to provide a culture medium manufacturing method, which comprises at least one step of: mixing and dissolving the plant growth nutrient in the water to form a plant growth nutrient solution; adjusting a pH of the plant growth nutrient solution to be 6.0; adding the agar powder in the plant growth nutrient solution and heating the plant growth nutrient solution until the agar powder has been dissolved, so as to form an agar solution; preparing a seeding board and disposing the seeding board on a freezing plate with a freezing temperature; and adding the agar solution of a predetermined volume in the seeding board and freezing the agar solution to a cooling temperature, so as to form the agar gel.

In the fourth embodiment of the present disclosure, the predetermined volume is 0.5 ml.

In the fourth embodiment of the present disclosure, the cooling temperature is 50 °C.

In the fourth embodiment of the present disclosure, the freezing temperature is -10 °C through 10 °C.

An objective of the present disclosure is to provide a culture medium structure, which comprises: a culture layer of the above culture medium; and a seeding board for receiving the culture medium layer, wherein the seeding board comprises a hollow body, the hollow body has a top hole, a bottom hole opposite to the top hole and a top base disposed on a top peripheral of the hollow body, and the hollow body and the top base are integrally formed.

In the fourth embodiment of the present disclosure, the hollow body is a cylindrical structure which the top hole and the bottom hole have diameters being identical to each other.

In the fourth embodiment of the present disclosure, the hollow body is a cone structure which is tapered from the top hole to the bottom hole.

In the fourth embodiment of the present disclosure, the bottom hole has a protrusion being disposed around an inner perimeter of the bottom hole.

In the fourth embodiment of the present disclosure, the bottom hole further comprises a seal for sealing the bottom hole, and the seal has multiple through holes.

In the fourth embodiment of the present disclosure, an outer curved surface of the hollow body and a plane have a tilted angle being less than 90 degrees.

In the fourth embodiment of the present disclosure, an outer curved surface of the hollow body and a plane have a tilted angle being 77 degrees.

In the fourth embodiment of the present disclosure, the culture medium structure further comprises a water-retaining film, disposed to cover the top hole.

In the fourth embodiment of the present disclosure, the culture medium structure further comprises a water-retaining film, disposed to cover the top hole and the top base.

In the fourth embodiment of the present disclosure, the culture medium structure further comprises a crop rack, having multiple crop holes.

In the fourth embodiment of the present disclosure, the crop rack is installed on a crop cistern.

In the fourth embodiment of the present disclosure, the crop cistern is disposed with liquid.

An objective of the present disclosure is to provide culture medium structure usage method, at least comprising: the above culture medium structure; disposing a vegetable seed on a top surface of the culture medium layer; and disposing the culture medium structure on a crop water tray.

In the fourth embodiment of the present disclosure, the vegetable seed is a lettuce seed or a brassicaceae seed.

Accordingly, by using the culture medium which comprises a solid agar gel having a plant growth nutrient and the manufacturing method of the culture medium in the present disclosure, it can prevent the accumulated of the nutrient of the hydroponics from harming the growth of the planted crops. Further, the seeding board of the culture medium structure in is reusable after the planted crop is harvested, so as to reduce the cost of crop planting of each time.

### DRAWINGS

FIG. 1 is schematic diagram showing a conventional hydroponics.
FIG. 2 is a schematic diagram showing a whole structure of a seeding board according to an embodiment of the present disclosure.
FIG. 3A is a schematic diagram showing a tilted angle of a seeding board according to an embodiment of the present disclosure.
FIG. 3B is a schematic diagram showing a tilted angle according to another one embodiment of the present disclosure.
FIG. 3C is a schematic diagram showing a tilted angle according to another one embodiment of the present disclosure.
FIG. 4 is a schematic diagram showing one step of a culture medium manufacturing method according to an embodiment of the present disclosure.
FIG. 5 is a schematic diagram showing another one step of a culture medium manufacturing method according to an embodiment of the present disclosure.
FIG. 6 is a schematic diagram showing another one step of a culture medium manufacturing method according to an embodiment of the present disclosure.
FIG. 7 is a schematic diagram showing a culture medium structure according to an embodiment of the present disclosure.
FIG. 8 is a schematic diagram showing one step of a culture medium structure usage method according to an embodiment of the present disclosure.
FIG. 9 is a schematic diagram showing another one step of a culture medium structure usage method according to an embodiment of the present disclosure.
FIG. 10 is a schematic diagram showing another one step of a culture medium structure usage method according to an embodiment of the present disclosure.
FIG. 11 is a flowchart of a culture medium manufacturing method according to an embodiment of the present disclosure.
FIG. 12 is a flowchart of a culture medium structure usage method according to an embodiment of the present disclosure.
FIG. 13 is a schematic diagram showing a linear curve of a freezing temperature of a freezing plate and a concretion time and which are sufficiently enough to freeze the culture medium in a culture medium manufacturing method according to an embodiment of the present disclosure.
FIG. 14 is a schematic diagram showing comparison of seed germination rates of using the sponge and the agar gel of the culture medium structure usage method according to an embodiment of the present disclosure.
FIG. 15 is a schematic diagram showing comparison of average growth heights of planted crops of using the sponge and the agar gel of the culture medium structure usage method according to an embodiment of the present disclosure.
FIG. 16 is a schematic diagram showing comparison of growth deformity rates of using the sponge and the agar gel of the culture medium structure usage method according to an embodiment of the present disclosure.

### DETAILED DESCRIPTION OF THE PREFERRED EMBODIMENTS

In order to facilitate the examiner to understand the technical features, the contents and the advantages of the present disclosure, as well as the efficacy that can be reached by the present disclosure, the present disclosure will now be described in detail with the drawings and the form of expression of the embodiments. The drawings used are only for illustration and support of the specification, and hence are not necessarily accurate in scale and precise in configuration after implementation of the present disclosure. Therefore, it should not be interpreted based upon the scale and the configuration on the drawings to confine the scope of the rights claimed on the practical implementation of the present disclosure.

In order to make the description of the present disclosure more detailed and complete, the following paragraphs give descriptions of the implementations and specific embodiments of the present disclosure, but they are not the only forms of implementing or using the specific embodiments of the present disclosure.

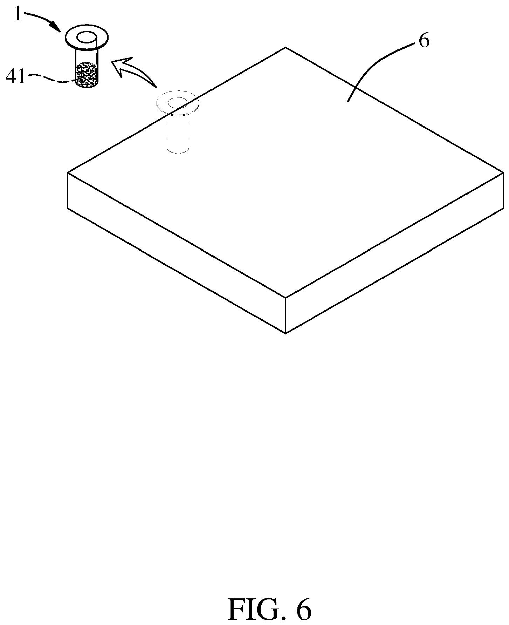

A main objective of the present disclosure is to provide a culture medium, in particular to, a culture medium is applied to the field of the plant culture, at least comprising an agar gel (41)(as shown in FIG.6)which is composed of a plant growth nutrient, agar powder and water wherein the agar gel (41) is 100 wt%(weight percent). In implementations, the plant growth nutrient, the agar powder are mixed in the water and heated to be dissolved in the water, and then cooled down to form the agar gel (41). The plant growth nutrient is the nutrient component which is essential to the plant growth. The plant growth nutrient is composed of diammonium phosphate and potassium nitrate, wherein the agar powder is 0.5-2.5 wt%. In one embodiment of the present disclosure, the diammonium phosphate is 0.01-0.02 wt%, or the potassium nitrate is 0.05-0.1 wt%. In one embodiment of the present disclosure, the agar power is 1 wt%. In implementations, according to the size of the container of the culture medium and growth condition of the planted crop, the ratio of the plant growth nutrient in the agar gel (41) can be adjusted.

A main objective of the present disclosure is to provide a culture medium, at least comprising an agar gel (41) which is composed of a plant growth nutrient, agar powder and water wherein the agar gel (41) is 100 wt%. In implementations, the plant growth nutrient, the agar powder are mixed in the water and heated to be dissolved in the water, and then cooled down to form the agar gel (41). The plant growth nutrient is at least one or combination of twos selected from diammonium phosphate, potassium nitrate, calcium nitrate, magnesium sulphate, manganese (III) chloride, ferrous sulfate, boric acid, zinc sulfate, copper sulfate, ammonium molybdate and silicon dioxide. In implementations, according to the growth stage of the planted crop, the plant growth nutrient can be adjusted to enhance the specific growth ability of the planted crop, for example, enhancing photosynthesis, respiration, chlorophyll formation, nitrogen fixation, growth of rhizomes and leaves plant hardness, resistance to diseases and insect pests, or flowering and fruiting ability. The agar powder is 0.5-2.5 wt%. In one embodiment of the present disclosure, plant growth nutrient is at least one or combination of twos selected from the diammonium phosphate being 0.01-0.02 wt%, the potassium nitrate being 0.05-0.1 wt%, the calcium nitrate being 0.05-0.1 wt%, the magnesium sulphate being 0.03-0.05 wt%, the manganese (III) chloride being 0.00015-0.0003 wt%, the ferrous sulfate being 0.002-0.004 wt%, the boric acid being 0.0001-0.0003 wt%, the zinc sulfate being 0.00002-0.00004 wt%, the copper sulfate being 0.00002-0.00004 wt%, the ammonium molybdate being 0.000001-0.000002 wt%, and the silicon dioxide being 0.00001-0.00002 wt%. In implementations, according to the size of the container of the culture medium and growth condition of the planted crop, the ratio of the plant growth nutrient in the agar gel (41) can be adjusted to enhance the specific growth ability of the planted crop, for example, enhancing photosynthesis, respiration, chlorophyll formation, nitrogen fixation, growth of rhizomes and leaves plant hardness, resistance to diseases and insect pests, or flowering and fruiting ability.

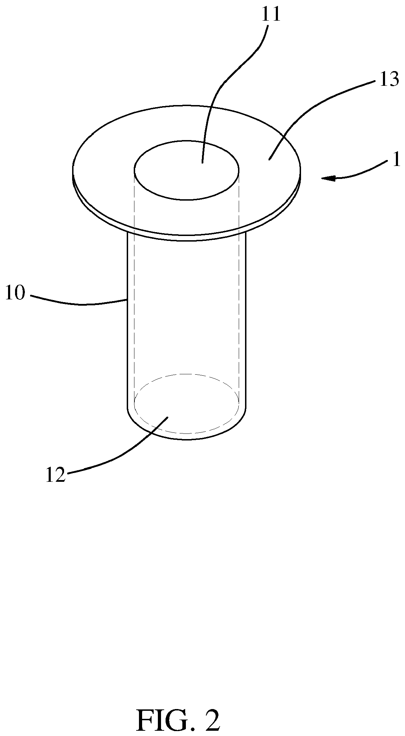

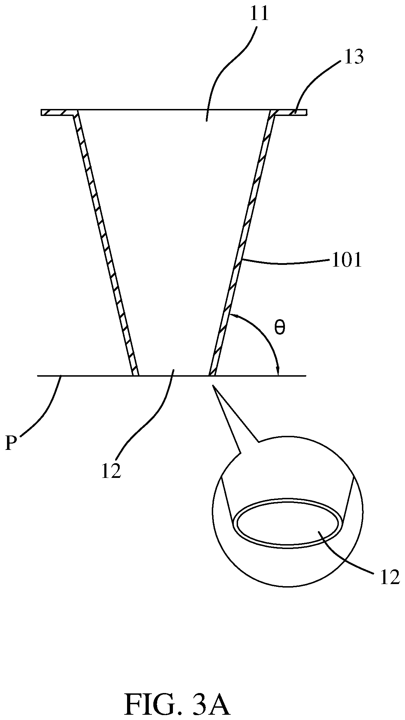

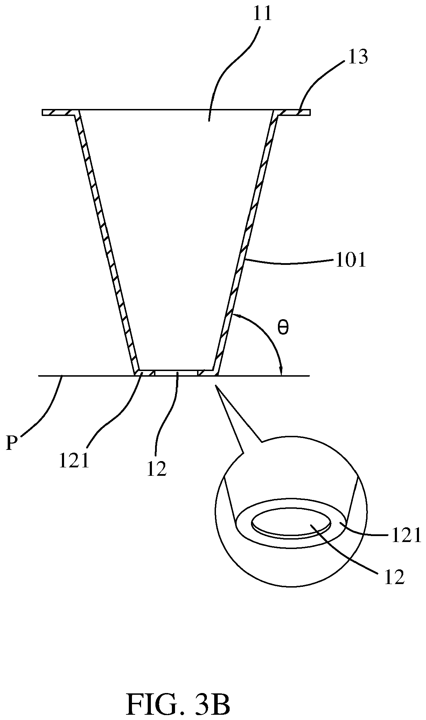

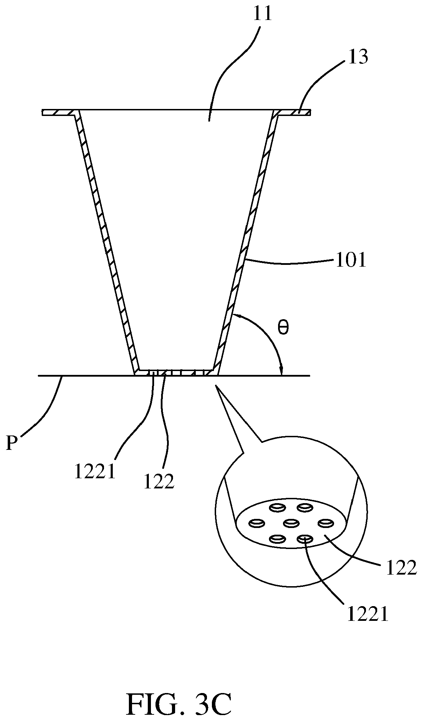

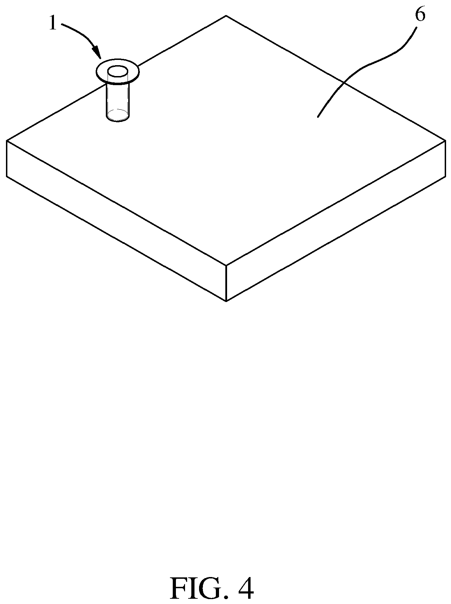

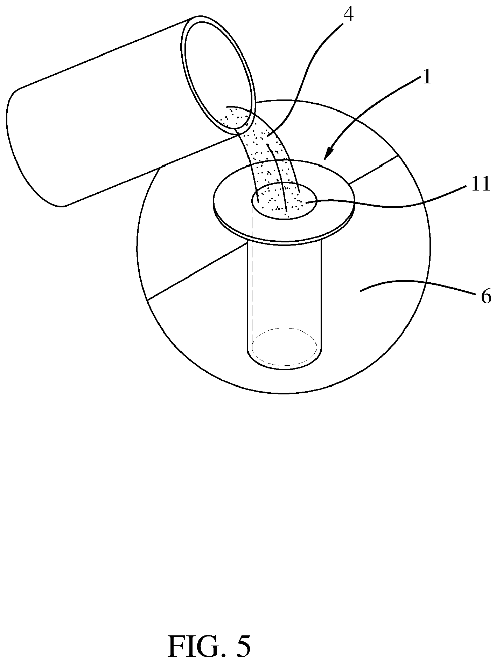

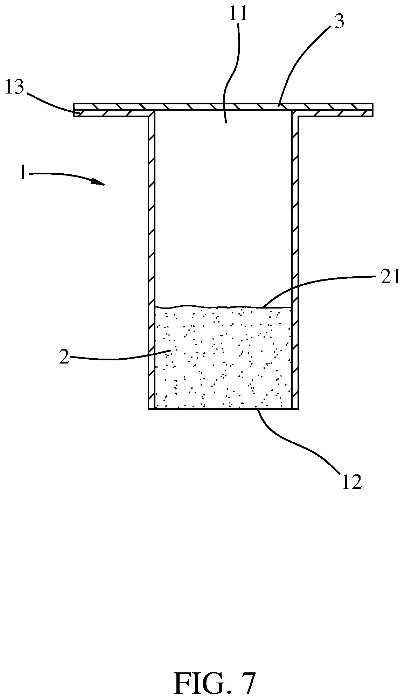

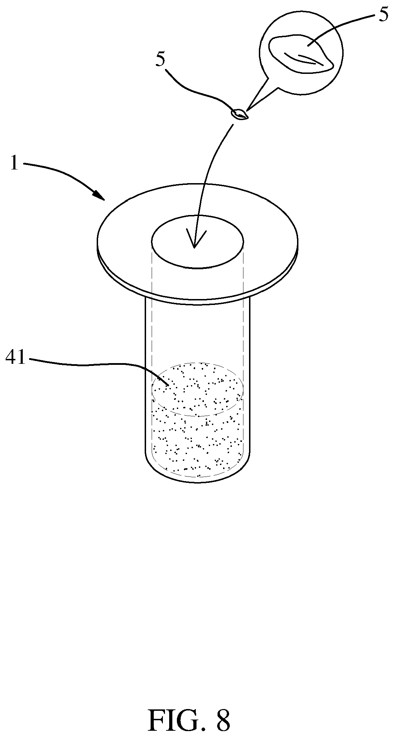

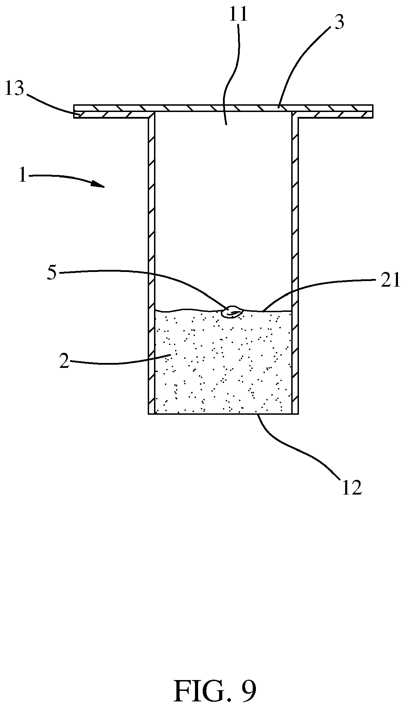

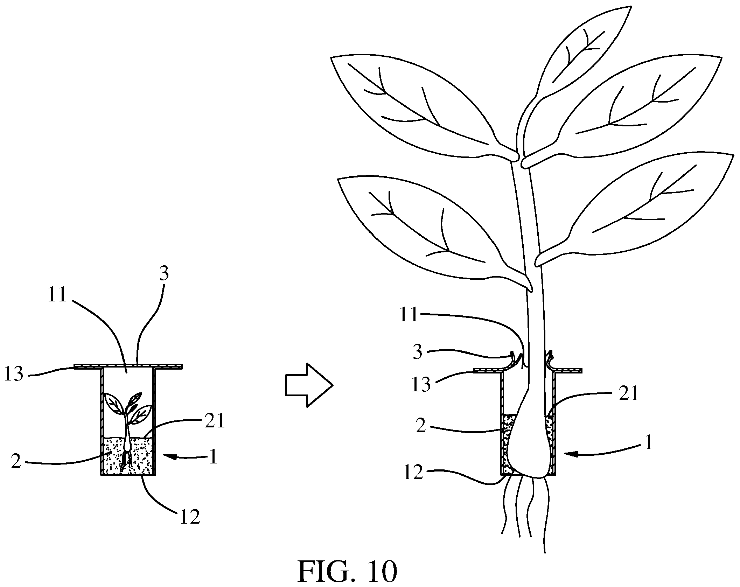

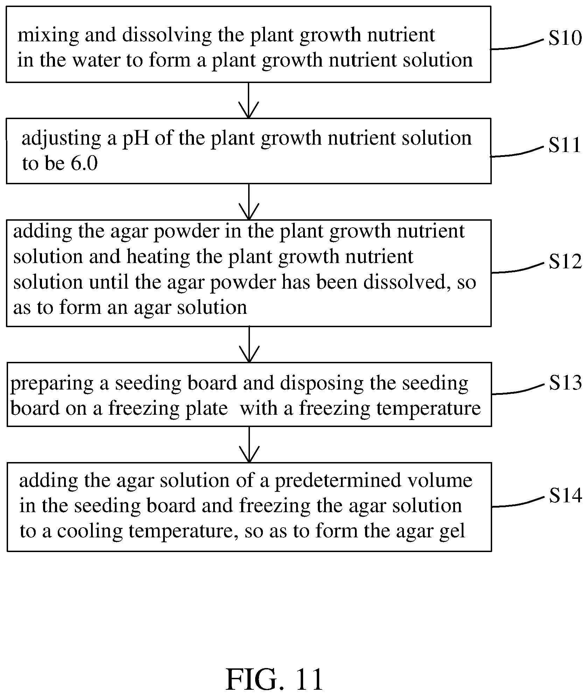

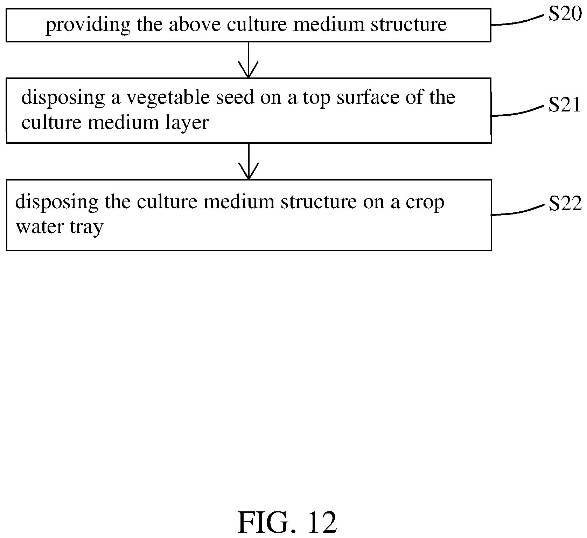

Refer to FIG. 2 through FIG. 12, FIG. 2 is a schematic diagram showing a whole structure of a seeding board according to an embodiment of the present disclosure, FIGs. 3A-3C are schematic diagrams showing tilted angles of seeding boards according to embodiments of the present disclosure, FIGs. 4-6 are schematic diagrams showing steps of a culture medium manufacturing method according to an embodiment of the present disclosure, FIG. 7 is a schematic diagram showing a culture medium structure according to an embodiment of the present disclosure, FIGs. 8-10 are schematic diagrams showing steps of a culture medium structure usage method according to embodiments of the present disclosure, and FIGs. 11 and 12 are a flowcharts of a culture medium manufacturing method and culture medium structure usage method according to embodiments of the present disclosure. Another main objective of the present disclosure is to provide a culture medium manufacturing method, comprising steps of: step (S10), mixing and dissolving the plant growth nutrient in the water to form a plant growth nutrient solution, wherein in implementations, the plant growth nutrient is weighed and selected, plant growth nutrient is at least one or combination of twos selected from diammonium phosphate, potassium nitrate, calcium nitrate, magnesium sulphate, manganese (III) chloride, ferrous sulfate, boric acid, zinc sulfate, copper sulfate, ammonium molybdate and silicon dioxide, then the component or components of the plant growth nutrient are poured in the container of the water, the solution is stirred until the plant growth nutrient is uniformly dissolved, and next, according to the required weight percentage of the plant growth nutrient, water are added so make the agar gel be 100 wt%; step (S11), adjusting a pH of the plant growth nutrient solution to be 6.0, so as to prevent the chemical precipitation and the non-uniform dissolution of the plant growth nutrient in the plant growth nutrient solution due to the high or low pH, which may affect fertility; step (S12), adding the agar powder in the plant growth nutrient solution and heating the plant growth nutrient solution until the agar powder has been dissolved, so as to form an agar solution (4), wherein in implementations, when adding the agar powder in the plant growth nutrient solution, the plant growth nutrient solution is heated and stirred to make the agar powder uniformly dissolved to form the agar solution (4); step (S13), preparing a seeding board (1) and disposing the seeding board (1) on a freezing plate (6) with a freezing temperature, wherein in implementations, the seeding board (1) is disposed on the freezing plate (6) in advance, so as to ease the post processes; step (S14), adding the agar solution (4) of a predetermined volume in the seeding board (1) and freezing the agar solution (4) to a cooling temperature, so as to form the agar gel (41), wherein in implementations, after the surface of the agar solution (4) which contacts the freezing plate (6) is concreted to form the agar gel (41), the seeding board (1) is removed from the freezing plate (6), and the agar solution (4) is cooled down to a cooling temperature to form the whole agar gel (41). In implementations, according to the size of the seeding board (1), the agar solution (4) of the predetermined volume is added in the seeding board (1), and by using the freezing plate (6), the agar solution (4) is concreted to form the agar gel (41) with the solid status. In one embodiment, the predetermined volume is 0.5 ml, and in implementations, according to the size of the container of the culture medium and growth condition of the planted crop, the predetermined volume can be adjusted. In one embodiment, the freezing temperature is -10 °C through 10 °C, and in implementations, by the freezing temperature being -10 °C through 10 °C, the freezing plate (6) can concrete the surface of the agar solution which contacts the freezing plate (6) to form the agar gel (41) in advance. In one embodiment, the cooling temperature can be 50 °C, and in implementations, the cooling temperature is adjusted to be 50 °C, such that the agar solution (4) is cooled down and concreted to form the agar gel (41) with a good quality.

To make the objectives, features and technical results of the present disclosure can be easily understood, a detailed and implemented culture medium manufacturing method is illustrated as an embodiment, so as to proof the application scope of the culture medium manufacturing method of the present disclosure, but the present disclosure is not limited by the illustrated embodiment. According to the objective of the present disclosure, another one culture medium manufacturing method is also implemented, which comprises steps of: step (S10), mixing and dissolving the plant growth nutrient in the water to form a plant growth nutrient solution; step (S11), adjusting a pH of the plant growth nutrient solution to be 6.0; step (S12) adding the agar powder in the plant growth nutrient solution and heating the plant growth nutrient solution until the agar powder has been dissolved, so as to form an agar solution (4); and step (S13), preparing a seeding board (1) and disposing the seeding board (1) on a freezing plate (6) with a freezing temperature; and step (S14), adding the agar solution (4) of a predetermined volume in the seeding board (6) and freezing the agar solution (4) to a cooling temperature, so as to form the agar gel (41).

Another one main objective of the present disclosure is to provide a culture medium structure which comprises a culture medium layer (2) of the culture medium and a seeding board (1) for receiving the culture medium layer (2). In implementations, the culture medium layer (2) is formed in the seeding board (1) in advance, or the formed culture medium layer (2) is added in the seeding board (1). The seeding board (1) comprises a hollow body (10), and the hollow body (10) has a top hole (11) and a bottom hole (12) being opposite to the top hole (11). In implementations, the hollow body (11) makes the culture medium layer (2) not slide outside the hollow body (10), the agar solution (4) can be added in the seeding board (1) via the top hole (11), the top hole (11) makes the planted crop grow upward, the root of the planted crop can penetrate the bottom hole (12), and a top base (13) can be disposed on a top peripheral of the hollow body (10), and the hollow body (10) and the top base (13) are integrally formed. In one embodiment, the hollow body (11) can have a cylindrical structure which the top hole (11) and bottom hole (12) have an identical diameter; the hollow body (11) can have a cone structure which the top hole (11) has the diameter larger than that of the bottom hole (12). Further, the cylindrical structure or cone structure of the hollow body (10) further has a protrusion (121), wherein the protrusion (121) is disposed around an inner perimeter of the bottom hole (12), and used to support the culture medium layer (2), such that the culture medium layer (2) will not slide outside the hollow body (11). Or alternatively, the bottom hole (12) further comprises a seal (122) for sealing the bottom hole (12), such that the culture medium layer (2) will not slide outside the hollow body (11), and the seal (122) can further have multiple through holes (1221), such that the root of the planted crop can penetrate the through holes (1221) of the seal (122) to absorb the nutrient. In one embodiment, an outer curved surface (101) of the hollow body (10) and a plane (P) have a tilted angle (θ) being less than 90 degrees. In one embodiment, an outer curved surface (101) of the hollow body (10) and a plane (P) have a tilted angle (θ) being 77 degrees. In implementations, by the design that the an outer curved surface (101) of the hollow body (10) and a plane (P) have a tilted angle (θ), the culture medium layer (2) will not slide outside the hollow body (10). In one embodiment, the culture medium structure further comprises a water-retaining film (3), disposed to cover the top hole (11); or the culture medium structure further comprises a water-retaining film (3), disposed to cover the top hole (11) and the top base (13). The water-retaining film (3) is used keep the water to vapor in the culture medium layer (2) of the culture medium structure. In one embodiment, the culture medium structure further comprises a crop rack, having multiple crop holes. The top base (13) of the seeding board (1) can be engaged to the crop hole, and the crop rack is installed on a crop cistern. The crop cistern can be disposed liquid therein, such that the root of the planted crop can penetrate the bottom hole (12) to absorb the liquid.

Another one main objective of the present disclosure is to provide a culture medium structure usage method, at least comprising: step (S20), providing the above culture medium structure; step (S21), disposing a vegetable seed (5) on a top surface (21) of the culture medium layer (2); and step (S22), disposing the culture medium structure on a crop cistern. In implementations, the crop cistern can be disposed with the liquid in advance, or disposed the liquid after the vegetable seed (5) has germinated. After the vegetable seed (5) germinates, the top hole (11) allows the planted crop to grow upward, and the root of the planted crop penetrates the bottom hole (12) to absorb the liquid on the crop cistern. In one embodiment, the vegetable seed (5) can be a lettuce or brassicaceae seed.

To make the objectives, features and technical results of the present disclosure can be easily understood, a detailed and implemented culture medium manufacturing method is illustrated as an embodiment, so as to proof the application scope of the culture medium structure usage method of the present disclosure, but the present disclosure is not limited by the illustrated embodiment. According to the objective of the present disclosure, another one culture medium structure usage method is also implemented, which comprises steps of: step (S20), providing the above culture medium structure; step (S21), disposing a vegetable seed (5) on a top surface (21) of the culture medium layer (2); and step (S22), disposing the culture medium structure on a crop water tray.

In order to make the description of the present disclosure invention more detailed and complete, the following presents an illustrative description of the implementation mode and specific embodiments of the present disclosure, but they are not merely implementable embodiments, such that the present disclosure is not limited thereto.

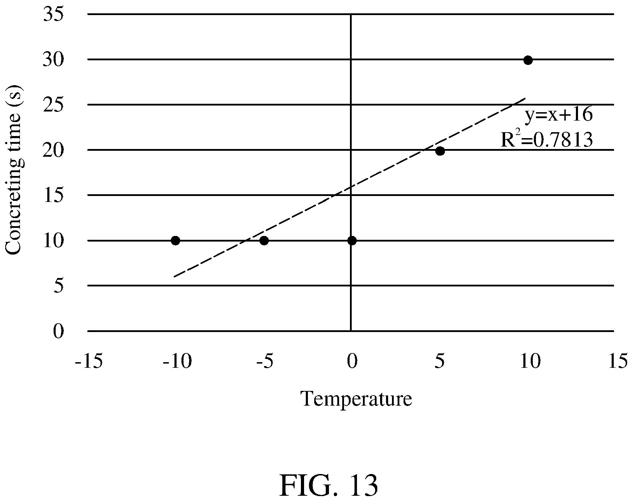

Referring to FIG. 13, FIG. 13 is a schematic diagram showing a linear curve of a freezing temperature of a freezing plate and a concretion time and which are sufficiently enough to freeze the culture medium in a culture medium manufacturing method according to an embodiment of the present disclosure.

### < An experiment of a freezing temperature of a freezing plate and a concretion time and which are sufficiently enough to freeze the culture medium in a culture medium manufacturing method >

### Estimating the freezing temperature of the freezing plate and the concretion time and which are sufficiently enough to freeze the culture medium in a culture medium manufacturing method

### Test Method :

mixing and dissolving the plant growth nutrient in the water to form a plant growth nutrient solution; adjusting a pH of the plant growth nutrient solution to be 6.0; adding the agar powder in the plant growth nutrient solution and heating the plant growth nutrient solution until the agar powder has been dissolved, so as to form an agar solution; preparing a seeding board and disposing the seeding board on a freezing plate with a freezing temperature; and adding the agar solution of 0.5 ml in the seeding board and freezing the agar solution to 50 °C, so as to form the agar gel, wherein the freezing plates with different freezing temperature are used to test, and the concretion time which the surface of the agar solution contacting the freezing plate is concrete to form the agar gel is recorded.

### Results and Discussion :

Refer to FIG. 13, and FIG. 13 is a schematic diagram showing a linear curve of a freezing temperature of a freezing plate and a concretion time and which are sufficiently enough to freeze the culture medium in a culture medium manufacturing method according to an embodiment of the present disclosure, wherein the X axis is used to present the different the freezing temperatures of the freezing plates, and the Y axis is used to present the concretion time. The experiment adopts freezing temperatures of -10 °C, -5 °C, 0 °C, 5 °C and 10 °C to test, as shown in FIG. 13, the concretion times of the freezing temperatures of -10 °C, -5 °C and 0 °C are about 10 seconds, the concretion time of the freezing temperature of 5 °C is about 20 seconds, and the concretion time of the freezing temperature of 10 °C is about 30 seconds. It can be known that the experiment result shows the freezing temperatures of -10 °C, -5 °C and 0 °C need less time to concrete the surface of the agar solution contacting the freezing plate to form the agar gel in advance. Thus, the freezing temperature of the freezing plate and the concretion time and which are sufficiently enough to freeze the culture medium in the culture medium manufacturing method can be known by the experiment, and that is, in culture medium manufacturing method, the freezing plate can be used to reduce the concretion time which the surface of the agar solution contacting the freezing plate to form the agar gel in advance. When massively producing the culture medium, without affecting the quality of the agar gel of the culture medium, the production efficiency of the agar gel can be increased.

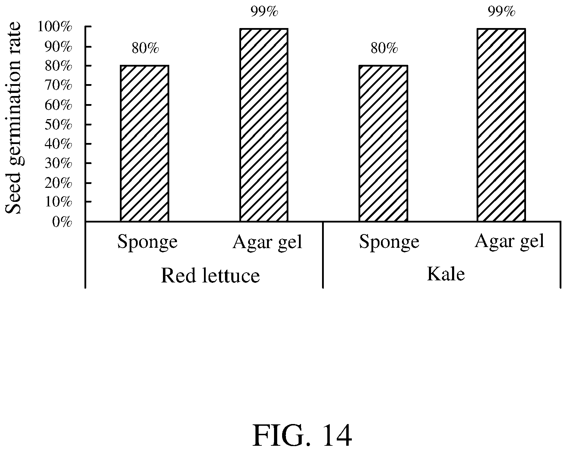

Refer to FIG. 14, and FIG. 14 is a schematic diagram showing comparison of seed germination rates of using the sponge and the agar gel of the culture medium structure usage method according to an embodiment of the present disclosure.

### < An experiment of seed germination rates of using the sponge and agar gel >

### Estimating the seed germination rates of using the sponge and agar gel

### Test Method:

providing the culture medium structure according to one of the embodiments of the present disclosure; disposing a vegetable seed on a top surface of the culture medium layer; and disposing the culture medium structure on a crop water tray, disposing a vegetable seed on the sponge, and disposing the sponge on the crop water tray, wherein the vegetable seeds selected to be 100 red lettuce seeds and 100 kale seeds, and after they are cultivated for 3 days, the seed germination rates of the red lettuce seeds and kale seeds are observed.

### Results and Discussion :

Referring to FIG. 14, in FIG. 14, the X axis is used to present the conditions of the red lettuce seeds and kale seeds which are cultivated by using the sponge and the agar gel, and the Y axis is used to present the seed germination rates of the red lettuce seeds and kale seeds of using the sponge and the agar gel. When the vegetable seeds are red lettuce seeds, the seed germination rate of the red lettuce seeds of using the agar gel is about 99%, and the seed germination rate of the red lettuce seeds of using the sponge is about 80%; when the vegetable seeds are kale seeds, the seed germination rate of the kale seeds of using the agar gel is about 99%, and the seed germination rate of the kale seeds of using the sponge is about 80%. It can be known that the experiment shows the whole seed germination rate of the vegetable seed of using the agar gel is better than that of using the sponge. Thus, the experiment shows the result that the culture medium structure usage method of using the agar gel in the present disclosure can cultivate the vegetable seed with much enhancement of the seed germination rate. When massively cultivating the vegetable seeds, the whole seed germination rate of the vegetable seeds can much enhanced, and cases that the vegetable seeds do not germinate are dramatically decreased, so as to increase the harvest rate of the vegetable.

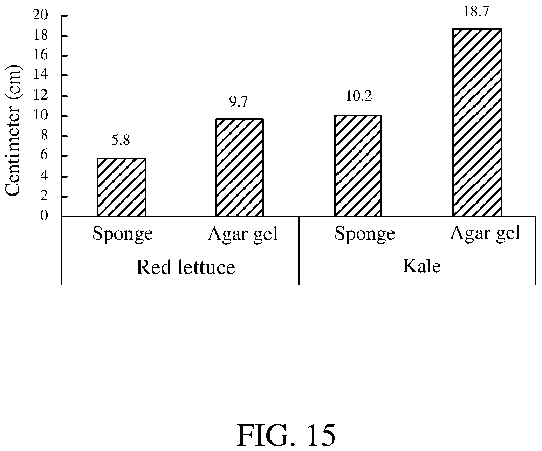

Refer to FIG. 15, and FIG. 15 is a schematic diagram showing comparison of average growth heights of planted crops of using the sponge and the agar gel of the culture medium structure usage method according to an embodiment of the present disclosure.

### < An experiment of the average growth heights of the planted crops of using the sponge and the agar gel >

### Estimating the average growth heights of the planted crops of using the sponge and the agar gel

### Test Method:

providing the culture medium structure according to one of embodiments of the present disclosure; disposing a vegetable seed on a top surface of the culture medium layer; and disposing the culture medium structure on a crop water tray, disposing a vegetable seed on the sponge, and disposing the sponge on the crop water tray, wherein the vegetable seeds selected to be 100 red lettuce seeds and 100 kale seeds, and after they are cultivated for 21 days, the average growth heights of the planted red lettuce and kale are measured, wherein the average growth height of the planted crop is measured from the top surface of the culture medium layer to the highest point of the planted crop.

### Results and Discussion:

Referring to FIG. 15, in FIG. 15, the X axis is used to present the conditions of the red lettuce seeds and kale seeds which are cultivated by using the sponge and the agar gel, and the Y axis is used to present the average growth heights of the planted crops of using the sponge and the agar gel. When the vegetable seeds are red lettuce seeds, the average growth height of the planted red lettuce of using the agar gel is about 9.7 cm, and the average growth height of the planted red lettuce of using the sponge is about 5.8 cm; when the vegetable seeds are kale seeds, the average growth height of the planted kale of using the agar gel is about 18.7 cm, and the average growth height of the planted kale of using the sponge is about 10.22 cm. Thus, the experiment shows the result that the culture medium structure usage method of using the agar gel in the present disclosure can cultivate the vegetable seed with much enhancement of the average growth height. When massively cultivating the vegetable seeds, the whole average growth height of the vegetable seeds can much enhanced, so as to increase the harvest weight of the vegetable.

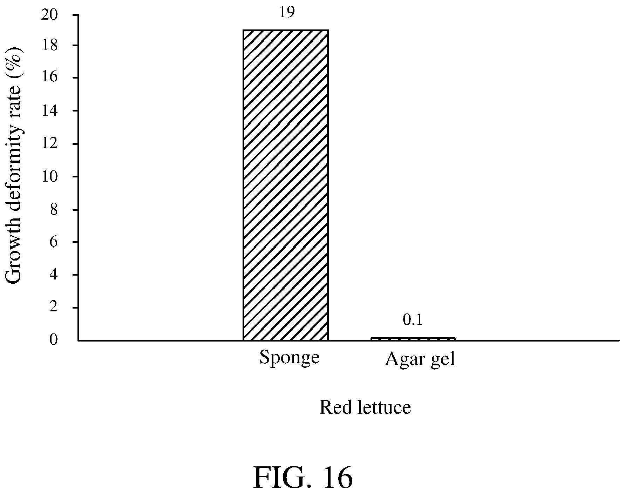

Refer to FIG. 16, and FIG. 16 is a schematic diagram showing comparison of growth deformity rates of using the sponge and the agar gel of the culture medium structure usage method according to an embodiment of the present disclosure.

### < An experiment of the growth deformity rates of using the sponge and the agar gel >

### Estimating the growth deformity rates of using the sponge and the agar gel

### Test Method:

providing the culture medium structure according to one of embodiments of the present disclosure; disposing a vegetable seed on a top surface of the culture medium layer; and disposing the culture medium structure on a crop water tray, disposing a vegetable seed on the sponge, and disposing the sponge on the crop water tray, wherein the vegetable seeds selected to be 100 red lettuce seeds, and after they are cultivated for 21 days, the growth deformity rates of the planted red lettuce are observed, wherein the growth deformity of the planted crop is defined as the condition of abnormal variation of the deformed planted crop which is compared to the normal grown planted crop.

### Results and Discussion:

Referring to FIG. 16, in FIG. 16, the X axis is used to present the conditions of the red lettuce seeds which are cultivated by using the sponge and the agar gel, and the Y axis is used to present the growth deformity rates of the planted crops of using the sponge and the agar gel. The growth deformity rate of the planted red lettuce of using the agar gel is about 0.1 %, and the growth deformity rate of the planted red lettuce of using the sponge is about 19 %. Thus, the experiment shows the result that the culture medium structure usage method of using the agar gel in the present disclosure can cultivate the vegetable seed with the lower growth deformity rate. When massively cultivating the vegetable seeds, the whole the health of the vegetable seeds can much enhanced, so as to increase the harvest quality of the planted crop.

To sum up, compared to the conventional prior art and the current product, the present disclosure has the following technical results.

One objective of the present disclosure is to provide the solid agar gel with the plant growth nutrient, and via the solid agar gel, the ratio of the plant growth nutrient is maintained, so as to prevent the accumulated of the nutrient of the hydroponics from harming the growth of the planted crops.

One obj ective of the present disclosure is to provide the seeding board, and after the planted crops are harvested, the seeding boards can be reused, so as to reduce the cost of crop planting of each time.

One objective of the present disclosure is to provide the solid agar gel with the plant growth nutrient, and after the planted crops are harvested, the agar gels on the planted crops can be easily cleaned out, and it does not affect the integrity of roots of the planted crops.

One objective of the present disclosure is to provide the solid agar gel with the plant growth nutrient, and compared to the plastic sponge used in the conventional hydroponics, the higher seed germination and the lower growth deformity rate are obtained, therefore harvesting more healthful planted crops.

## Claims

1. A culture medium, at least comprising: an agar gel (41) which is composed of a plant growth nutrient, agar powder and water, wherein the agar gel (41) is 100 wt%.

2. The culture medium according to claim 1, wherein the plant growth nutrient is composed of diammonium phosphate and potassium nitrate.

3. The culture medium according to claim 2, wherein the agar powder is 0.5-2.5 wt%.

4. The culture medium according to claim 3, wherein the diammonium phosphate is 0.01-0.02 wt%.

5. The culture medium according to claim 3, wherein the potassium nitrate is 0.05-0.1 wt%.

6. The culture medium according to claim 2, wherein the agar powder is 1wt%.

7. The culture medium according to claim 6, wherein the diammonium phosphate 0.01-0.02 wt%.

8. The culture medium according to claim 6, wherein the potassium nitrate is 0.05-0.1 wt%.

9. The culture medium according to claim 1, wherein the plant growth nutrient is at least one or combination of twos selected from diammonium phosphate, potassium nitrate, calcium nitrate, magnesium sulphate, manganese (III) chloride, ferrous sulfate, boric acid, zinc sulfate, copper sulfate, ammonium molybdate and silicon dioxide.

10. The culture medium according to claim 9, wherein the agar powder is 0.5-2.5 wt%.

11. The culture medium according to claim 10, wherein the diammonium phosphate is 0.01-0.02 wt%.

12. The culture medium according to claim 10, wherein the potassium nitrate is 0.05-0.1 wt%.

13. The culture medium according to claim 10, wherein the calcium nitrate is 0.05-0.1 wt%.

14. The culture medium according to claim 10, wherein the magnesium sulphate is 0.03-0.05 wt%.

15. The culture medium according to claim 10, wherein the manganese (III) chloride is 0.00015-0.0003 wt%.

16. The culture medium according to claim 10, wherein the ferrous sulfate is 0.002-0.004 wt%.

17. The culture medium according to claim 10, wherein the boric acid is 0.0001-0.0003 wt%.

18. The culture medium according to claim 10, wherein the zinc sulfate is 0.00002-0.00004 wt%.

19. The culture medium according to claim 10, wherein the copper sulfate is 0.00002-0.00004 wt%.

20. The culture medium according to claim 10, wherein the ammonium molybdate is 0.000001-0.000002 wt%.

21. The culture medium according to claim 10, wherein the silicon dioxide is 0.00001-0.00002 wt%.

22. The culture medium according to claim 9, wherein the agar powder is 1wt %.

23. The culture medium according to claim 22, wherein the diammonium phosphate is 0.01-0.02 wt%.

24. The culture medium according to claim 22, wherein the potassium nitrate is 0.05-0.1 wt%.

25. The culture medium according to claim 22, wherein the calcium nitrate is 0.05-0.1 wt%.

26. The culture medium according to claim 22, wherein the magnesium sulphate is 0.03-0.05 wt%.

27. The culture medium according to claim 22, wherein the manganese (III) chloride is 0.00015-0.0003 wt%.

28. The culture medium according to claim 22, wherein the ferrous sulfate is 0.002-0.004 wt%.

29. The culture medium according to claim 22, wherein the boric acid is 0.0001-0.0003 wt%.

30. The culture medium according to claim 22, wherein the zinc sulfate is 0.00002-0.00004 wt%.

31. The culture medium according to claim 22, wherein the copper sulfate is 0.00002-0.00004 wt%.

32. The culture medium according to claim 22, wherein the ammonium molybdate is 0.000001-0.000002 wt%.

33. The culture medium according to claim 22, wherein the silicon dioxide is 0.00001-0.00002 wt%.

34. A culture medium manufacturing method for forming the culture medium according to claim 1, comprising:
(S10) mixing and dissolving the plant growth nutrient in the water to form a plant growth nutrient solution (4);
(S11) adjusting a pH of the plant growth nutrient solution to be 6.0;
(S12) adding the agar powder in the plant growth nutrient solution and heating the plant growth nutrient solution until the agar powder has been dissolved, so as to form an agar solution (4);
(S13) preparing a seeding board and disposing the seeding board (1) on a freezing plate (6) with a freezing temperature; and
(S14) adding the agar solution (4) of a predetermined volume in the seeding board (1) and freezing the agar solution (4) to a cooling temperature, so as to form the agar gel (41).

35. The culture medium manufacturing method according to claim 34, wherein the predetermined volume is 0.5 ml.

36. The culture medium manufacturing method according to claim 34, wherein the cooling temperature is 50 °C.

37. The culture medium manufacturing method according to claim 34, wherein the freezing temperature is -10 °C through 10 °C.

38. A culture medium structure, comprising:
a culture layer (2) of the culture medium according to the claim 1; and
a seeding board (1) for receiving the culture medium layer (2), wherein the seeding board (1) comprises a hollow body (10), the hollow body (10) has a top hole (11), a bottom hole (12) opposite to the top hole (11) and a top base (13) disposed on a top peripheral of the hollow body (10), and the hollow body (10) and the top base (13) are integrally formed.

39. The culture medium structure according to claim 38, wherein the hollow body (10) is a cylindrical structure which the top hole (11) and the bottom hole (12) have diameters being identical to each other.

40. The culture medium structure according to claim 38, wherein the hollow body (10) is a cone structure which is tapered from the top hole (11) to the bottom hole (12).

41. The culture medium structure according to claim 38, wherein the bottom hole (12) has a protrusion (121) being disposed around an inner perimeter of the bottom hole (12).

42. The culture medium structure according to claim 38, wherein the bottom hole (12) further comprises a seal (122) for sealing the bottom hole (12), and the seal (122) has multiple through holes (1221).

43. The culture medium structure according to claim 40, wherein an outer curved surface (101) of the hollow body (10) and a plane (P) have a tilted angle (θ) being less than 90 degrees.

44. The culture medium structure according to claim 40, wherein an outer curved surface (101) of the hollow body (10) and a plane (P) have a tilted angle (θ) being 77 degrees.

45. The culture medium structure according to claim 38, further comprising:
a water-retaining film (3), disposed to cover the top hole (11).

46. The culture medium structure according to claim 38, further comprising:
a water-retaining film (3), disposed to cover the top hole (11) and the top base (13).

47. The culture medium structure according to claim 38, further comprising:
a crop rack, having multiple crop holes.

48. The culture medium structure according to claim 47, wherein the crop rack is installed on a crop cistern.

49. The culture medium structure according to claim 48, wherein the crop cistern is disposed with liquid.

50. A culture medium structure usage method, at least comprising:
(S20) providing the culture medium structure according to claim 38;
(S21) disposing a vegetable seed (5) on a top surface (21) of the culture medium layer (2); and
(S22) disposing the culture medium structure on a crop water tray.

51. The culture medium structure usage method according to claim 50, wherein the vegetable seed (5) is a lettuce seed or a brassicaceae seed.
